# EUROPEAN PATENT SPECIFICATION

(11) **EP 2 623 897 B1**
(45) Date of publication and mention of the grant of the patent: **01.04.2020**
(21) Application number: 11828262.3
(22) Date of filing: 28.02.2011
(51) Int. Cl.: F25B 47/02, F25B 13/00, F24F 11/30

(54) **REFRIGERATION CYCLE EQUIPMENT**
KÄLTEKREISLAUFVORRICHTUNG
DISPOSITIF À CYCLE DE RÉFRIGÉRATION

(30) Priority: 01.10.2010 JP 2010223763
(43) Date of publication of application: 07.08.2013
(73) Proprietor: Panasonic Corporation, Osaka 571-8501 (JP)
(72) Inventor: SUGIO, Takashi, 7F OBP Panasonic Tower, 2-1-61 Shiromi, Chuo-ku, Osaka 540-6207 (JP); TAKAHASHI, Masatoshi, 7F OBP Panasonic Tower, 2-1-61 Shiromi, Chuo-ku, Osaka 540-6207 (JP)
(74) Representative: Eisenführ Speiser
(86) International application number: PCT/JP2011/001138
(87) International publication number: WO 2012/042692

(56) References cited:
- EP-A2- 1 983 277
- JP-A- H0 743 051
- JP-A- 60 175 976
- JP-A- S60 175 976
- JP-A- S63 290 371
- JP-A- 2003 302 131
- JP-A- 2003 302 131
- JP-A- 2007 051 794
- JP-A- 2007 292 390
- JP-A- 2009 145 032

## Description

### Technical Field

The present invention relates to refrigeration cycle equipment including a compressor, an indoor heat exchanger, an expansion valve, and an outdoor heat exchanger, all connected in series via refrigerant piping and, in particular, to refrigeration cycle equipment capable of enhancing the reliability of the compressor during defrosting.

### Background Art

A conventional heat pump air conditioner conducts defrosting during heating by switching a four-way valve from a heating cycle to a cooling cycle when frost has been formed on an outdoor heat exchanger. In this defrosting method, an indoor fan is at a stop, but cold air flows gradually out of an indoor unit, thus posing a problem of warmth being lost.

In view of this, another air conditioner has been proposed having a heat storage tank mounted on a compressor in an outdoor unit for the purpose of defrosting by making use of waste heat of the compressor that has been stored in the heat storage tank during heating (see, for example, Patent Literature 1).

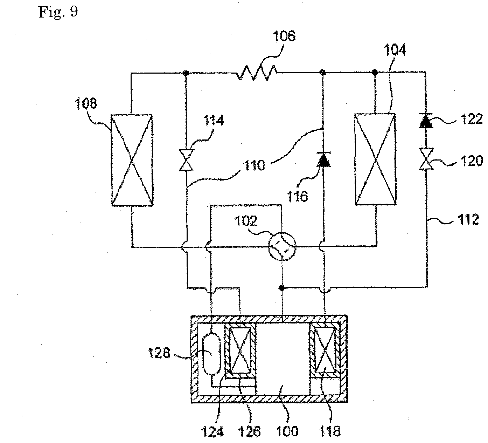

Fig. 9 depicts an example of refrigeration cycle equipment employing such a defrosting method. This refrigeration cycle equipment includes an outdoor unit, in which a compressor 100, a four-way valve 102, an outdoor heat exchanger 104, and a capillary tube 106 are provided, and an indoor unit in which an indoor heat exchanger 108 is provided. All of the compressor 100, the four-way valve 102, the outdoor heat exchanger 104, the capillary tube 106, and the indoor heat exchanger 108 are connected via refrigerant piping. The refrigeration cycle equipment also includes a first bypass circuit 110 for bypassing the capillary tube 106 and a second bypass circuit 112 having one end connected to a pipe extending from a discharge side of the compressor 100 to the indoor heat exchanger 108 via the four-way valve 102 and the other end connected to another pipe extending from the capillary tube 106 to the outdoor heat exchanger 104. The first bypass circuit 110 includes a two-way valve 114, a check valve 116, and a heat storage heat exchanger 118, while the second bypass circuit 112 includes a two-way valve 120 and a check valve 122.

Furthermore, a heat storage tank 124 is provided around the compressor 100, and a latent heat storage material 126 for heat exchanging with the heat storage heat exchanger 118 is filled in the heat storage tank 124.

In this refrigeration cycle, the two two-way valves 114, 120 are opened during defrosting to allow part of a refrigerant discharged from the compressor 100 to flow into the second bypass circuit 112 and the remaining refrigerant to flow into the indoor heat exchanger 108 via the four-way valve 102. The refrigerant that has passed through the indoor heat exchanger 108 is used for heating, and a slight amount of the refrigerant then flows into the outdoor heat exchanger 104 via the capillary tube 106, while the remaining majority of the refrigerant flows into the first bypass circuit 110 and into the heat storage heat exchanger 118 via the two-way valve 114 to take heat from the heat storage material 126, and then passes through the check valve 116 to join the refrigerant that has passed through the capillary tube 106 before the refrigerant flows into the outdoor heat exchanger 104. Thereafter, the refrigerant flowing toward the outdoor heat exchanger 104 joins the refrigerant that has passed through the second bypass circuit 112 at an inlet of the outdoor heat exchanger 104 to conduct defrosting by making use of heat contained in the refrigerant. After the defrosting, the refrigerant passes through the four-way valve 102 and then enters the compressor 100.

In this refrigeration cycle equipment, the second bypass circuit 112 acts to introduce a hot gas discharged from the compressor 100 during defrosting to the outdoor heat exchanger 104 and maintain high pressure of the refrigerant flowing into the outdoor heat exchanger 104, thus making it possible to enhance the defrosting capability and complete the defrosting within a considerably short period of time.

### Patent Literature

Patent Literature 1: JP H03-31666 A
Patent Literature 2: JP S60 175976 A

JP patent application S60 175976 A discloses a refrigeration cycle equipment according to the preamble of claim 1.

### Disclosure of Invention

### Problems to be solved by the Invention

In the refrigeration cycle equipment as disclosed in Patent Literature 1, a refrigerant discharged from the compressor 100 and another refrigerant that has absorbed heat stored in the heat storage material 126 when passing through the heat storage heat exchanger 118 are both supplied to the outdoor heat exchanger 104 to defrost the outdoor heat exchanger 104. Accordingly, if a sufficient amount of heat is not stored in the heat storage material 126, it sometimes happens that the outdoor heat exchanger 104 cannot be sufficiently defrosted.

In particular, because no large heating capacity is required at high outdoor temperatures, the compressor is mostly operated at a low capacity for a long period of time. In this case, the temperature of the compressor is low and, accordingly, it often happens that a sufficient amount of heat is not stored in the heat storage material 126.

The present invention has been developed to solve the problems inherent in the prior art and is intended to provide refrigeration cycle equipment capable of positively defrosting the outdoor heat exchanger 104 at high outdoor temperatures at which the temperature of the heat storage material is difficult to increase.

### Means to Solving the Issue

In accomplishing the above objective, the present invention is directed to refrigeration cycle equipment that includes a compressor, an indoor heat exchanger connected to the compressor, an expansion valve connected to the indoor heat exchanger, an outdoor heat exchanger connected to the expansion valve, an outdoor fan, an outdoor temperature detecting means, and a four-way valve through which the outdoor heat exchanger is connected to the compressor. The refrigeration cycle equipment further includes a heat storage material disposed around the compressor to store heat generated by the compressor and a heat storage heat exchanger for heat-exchange with heat stored in the heat storage material. In a defrosting operation, a refrigerant discharged from the compressor is introduced to the outdoor heat exchanger and to the heat storage heat exchanger via the indoor heat exchanger, and a refrigerant having passed through the outdoor heat exchanger and another refrigerant heat-exchanged with the heat storage material in the heat storage heat exchanger join and are subsequently introduced to a suction side of the compressor. When the outdoor temperature detected by the outdoor temperature detecting means is greater than or equal to a predetermined value, the outdoor fan is operated.

### Effect of the Invention

According to the present invention, because heat in outdoor air can be supplied to the outdoor heat exchanger at high outdoor temperatures at which the temperature of the heat storage material is difficult to increase, the outdoor heat exchanger can be positively defrosted.

### Brief Description of Drawings

Fig. 1 is a view depicting a configuration of an air conditioner having refrigeration cycle equipment according to a first embodiment of the present invention.
Fig. 2 is a schematic view of the air conditioner of Fig. 1, depicting operation thereof and a flow of refrigerant during normal heating.
Fig. 3 is a schematic view of the air conditioner of Fig. 1, depicting operation thereof and a flow of refrigerant during defrosting/heating.
Fig. 4 is a view depicting a shape of a junction, in refrigerant piping of the air conditioner of Fig. 1, where a liquid phase refrigerant and a gas phase refrigerant join.
Fig. 5 is a view depicting a shape of a junction, in refrigerant piping of an air conditioner having refrigeration cycle equipment according to a second embodiment of the present invention, where a liquid phase refrigerant and a gas phase refrigerant join.
Fig. 6 is a view depicting a configuration of an air conditioner having refrigeration cycle equipment according to a third embodiment of the present invention.
Fig. 7 is a view depicting a shape of a junction, in refrigerant piping of the air conditioner of Fig. 6, where a liquid phase refrigerant and a gas phase refrigerant join.
Fig. 8 is a flowchart depicting a control example of an outdoor fan in a defrosting operation according to the present invention.
Fig. 9 is a schematic view depicting a configuration of conventional refrigeration cycle equipment.

### DESCRIPTION OF EMBODIMENTS

A first invention is directed to refrigeration cycle equipment that includes a compressor, an indoor heat exchanger connected to the compressor, an expansion valve connected to the indoor heat exchanger, an outdoor heat exchanger connected to the expansion valve, an outdoor fan, an outdoor temperature detecting means, and a four-way valve through which the outdoor heat exchanger is connected to the compressor. The refrigeration cycle equipment further includes a heat storage material disposed around the compressor to store heat generated by the compressor and a heat storage heat exchanger for heat-exchange with heat stored in the heat storage material. In a defrosting operation, a refrigerant discharged from the compressor is introduced to the outdoor heat exchanger and to the heat storage heat exchanger via the indoor heat exchanger, and a refrigerant having passed through the outdoor heat exchanger and another refrigerant heat-exchanged with the heat storage material in the heat storage heat exchanger join and are subsequently introduced to a suction side of the compressor. When the outdoor temperature detected by the outdoor temperature detecting means is greater than or equal to a predetermined value, the outdoor fan is operated.

By this construction, because heat in outdoor air can be supplied to the outdoor heat exchanger at high outdoor temperatures at which the temperature of the heat storage material is difficult to increase, the outdoor heat exchanger can be positively defrosted.

In the first invention, a second invention is such that a heat storage material temperature detecting means is further provided to detect a temperature of the heat storage material. When the temperature of the heat storage material detected by the heat storage material temperature detecting means is less than or equal to a predetermined value, the outdoor fan is operated during the defrosting operation.

By this construction, because heat in outdoor air can be supplied to the outdoor heat exchanger particularly when the temperature of the heat storage material during heat storage is not high, the outdoor heat exchanger can be positively defrosted and, at the same time, the outdoor fan does not have to be operated when a sufficient amount of heat is stored in the heat storage material, thus resulting in a reduction in operational cost.

Embodiments of the present invention are explained hereinafter with reference to the drawings, but the present invention is not limited to the embodiments.

### (Embodiment 1)

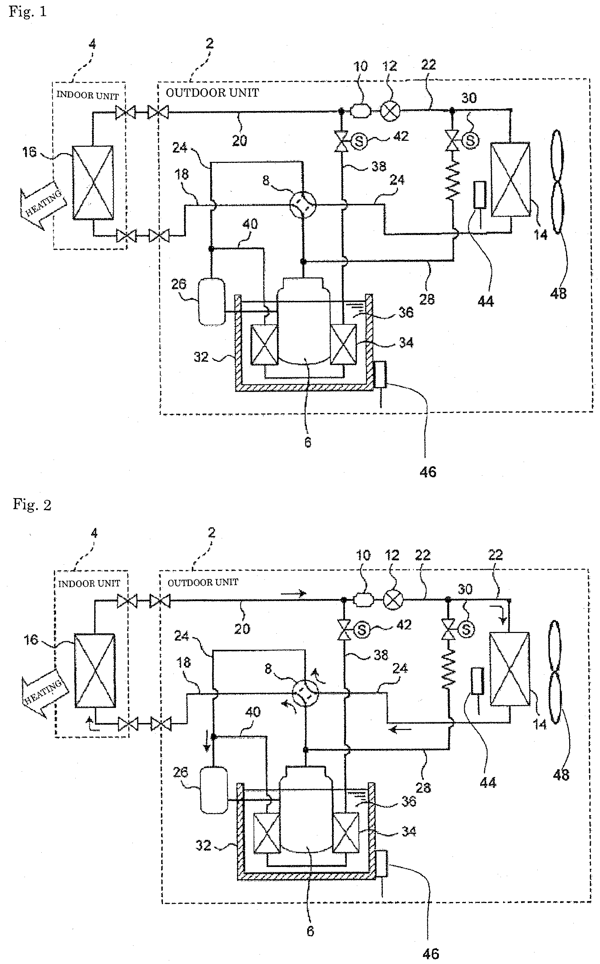

Fig. 1 depicts a configuration of an air conditioner having refrigeration cycle equipment according to a first embodiment of the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. Those constituent elements are connected via refrigerant piping to define a refrigeration cycle.

The outdoor unit 2 also accommodates therein an outdoor fan 48 for conveying outdoor air to be heat-exchanged by the outdoor heat exchanger 14, an outdoor temperature sensor 44 for detecting a temperature of outdoor air, and a heat storage material temperature sensor 46 for detecting a temperature of a heat storage material 36 (explained later).

More specifically, the compressor 6 and the indoor heat exchanger 16 are connected to each other via a first refrigerant pipe 18 to which the four-way valve 8 is fitted, and the indoor heat exchanger 16 and the expansion valve 12 are connected to each other via a second refrigerant pipe 20 to which the strainer 10 is fitted. Also, the expansion valve 12 and the outdoor heat exchanger 14 are connected to each other via a third refrigerant pipe 22, and the outdoor heat exchanger 14 and the compressor 6 are connected to each other via a fourth refrigerant pipe 24.

The four-way valve 8 is located midway on the fourth refrigerant pipe 24, and an accumulator 26 for separating a liquid phase refrigerant and a gas phase refrigerant is provided on the fourth refrigerant pipe 24 on a refrigerant suction side of the compressor 6. The compressor 6 and the third refrigerant pipe 22 are connected to each other via a fifth refrigerant pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 for heat exchanging with the heat storage heat exchanger 34. The heat storage tank 32, the heat storage heat exchanger 34, and the heat storage material 36 constitute a heat storage device.

Also, the second refrigerant pipe 20 and the heat storage heat exchanger 34 are connected to each other via a sixth refrigerant pipe 38, and the heat storage heat exchanger 34 and the fourth refrigerant pipe 24 are connected to each other via a seventh refrigerant pipe 40. A second solenoid valve 42 is provided on the sixth refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the direction of air discharged from the indoor unit 4 and the horizontal wind direction changing blades horizontally change the direction of air discharged from the indoor unit 4.

The compressor 6, the fan, the vertical wind direction changing blades, the horizontal wind direction changing blades, the four-way valve 8, the expansion valve 12, the solenoid valves 30, 42, the sensors, and the like are electrically connected to and controlled by a controller (for example, a microcomputer not shown).

A relation of connection and functioning of the component parts of the above-described refrigeration cycle equipment are explained hereinafter with a flow of the refrigerant, during the heating operation as an example.

A refrigerant discharged from a discharge port in the compressor 6 passes through the four-way valve 8 and reaches the indoor heat exchanger 16 via the first refrigerant pipe 18. The refrigerant condenses in the indoor heat exchanger 16 upon heat exchange with indoor air, leaves the indoor heat exchanger 16, and passes through the second refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third refrigerant pipe 22. The refrigerant then evaporates in the outdoor heat exchanger 14 upon heat exchange with outdoor air and passes through the fourth refrigerant pipe 24, the four-way valve 8, and the accumulator 26, before the refrigerant returns to a suction port in the compressor 6.

The fifth refrigerant pipe 28 branched from the first refrigerant pipe 18 between the discharge port in the compressor 6 and the four-way valve 8 joins the third refrigerant pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed so as to encircle and contact the compressor 6 to store heat generated by the compressor 6 in the heat storage material 36. The sixth refrigerant pipe 38 branched from the second refrigerant pipe 20 between the indoor heat exchanger 16 and the strainer 10 reaches an inlet of the heat storage heat exchanger 34 via the second solenoid valve 42, and the seventh refrigerant pipe 40 extending from an outlet of the heat storage heat exchanger 34 joins the fourth refrigerant pipe 24 between the four-way valve 8 and the accumulator 26.

Although the strainer 10 is illustrated in Fig. 1 as being fitted to the second refrigerant pipe 20 between a branched portion thereof into the sixth refrigerant pipe 38 and the expansion valve 12, the strainer 10 may be fitted to the second refrigerant pipe 20 between the indoor heat exchanger 16 and the branched portion into the sixth refrigerant pipe 38 for the purpose of preventing invasion of foreign substances into the expansion valve 12.

However, the strainer 10 has pressure loss and, hence, the arrangement of the former allows the refrigerant to easily flow toward the sixth refrigerant pipe 38 at the branched portion of the second refrigerant pipe 20 into the sixth refrigerant pipe 38, thereby increasing the refrigerant circulation volume in a bypass circuit including the sixth refrigerant pipe 38, the heat storage heat exchanger 34, and the seventh refrigerant pipe 40. With the increased refrigerant circulation volume in the heat storage heat exchanger 34, even if the temperature of the heat storage material 36 is high and the heat storage heat exchanger 34 has a very high heat exchanging performance, it is unlikely that the heat storage heat exchanger 34 may become incapable of heat exchanging at a latter half thereof due to a high degree of superheat, thus allowing the heat storage heat exchanger 34 to show a sufficient heat exchanging performance and a sufficient defrosting performance.

Operation of the air conditioner during normal heating is explained hereinafter with reference to Fig. 2 schematically depicting the operation of the air conditioner of Fig. 1 and a flow of the refrigerant during normal heating.

During normal heating, the first solenoid valve 30 and the second solenoid valve 42 are both closed. In this case, as described above, the refrigerant discharged from the discharge port in the compressor 6 passes through the four-way valve 8 and reaches the indoor heat exchanger 16 via the first refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the third refrigerant pipe 22. Having evaporated in the outdoor heat exchanger 14 upon heat exchange with outdoor air, the refrigerant passes through the fourth refrigerant pipe 24 and through the four-way valve 8 and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

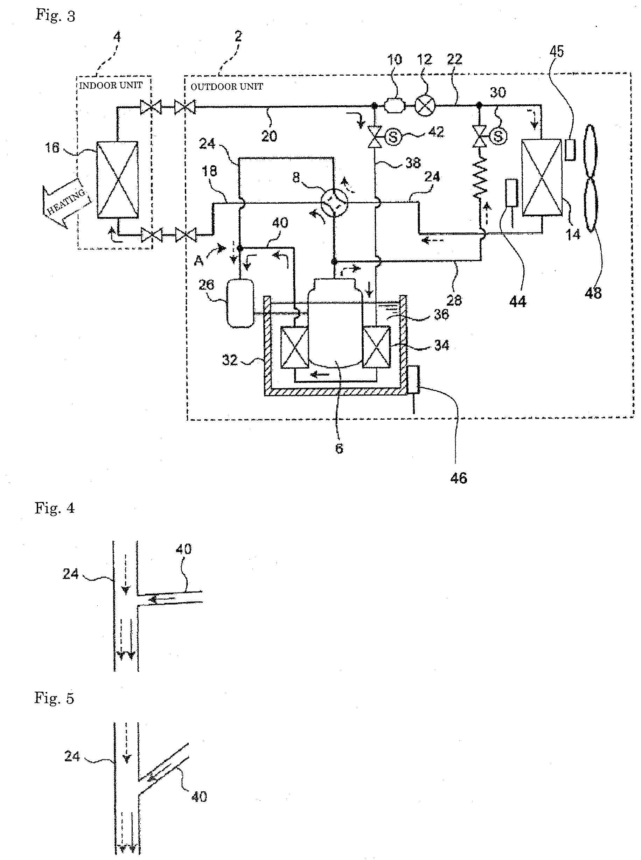

Operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dashed arrows indicate a flow of refrigerant used for defrosting

If frost is formed and grows on the outdoor heat exchanger 14 during the above-discussed normal heating, the airflow resistance of the outdoor heat exchanger 14 increases to thereby reduce the amount of air passing therethrough, thus resulting in a reduction of the evaporating temperature in the outdoor heat exchanger 14. As shown in Fig. 3, the air conditioner according to the present invention is provided with a piping temperature sensor 45 for detecting a piping temperature of the outdoor heat exchanger 14, and if this piping temperature sensor 45 detects a reduced evaporating temperature compared with an evaporating temperature when no frost is formed, the controller issues a command to shift the air conditioner from the normal heating operation to the defrosting/heating operation.

When the air conditioner is shifted from the normal heating operation to the defrosting/heating operation, the controller controls the first solenoid valve 30 and the second solenoid valve 42 to be opened. In this case, in addition to the flow of refrigerant during the normal heating operation as discussed above, part of a gaseous refrigerant discharged from the discharge port in the compressor 6 passes through the fifth refrigerant pipe 28 and the first solenoid valve 30 and joins a refrigerant passing through the third refrigerant pipe 22 to heat the outdoor heat exchanger 14. Having condensed and turned into a liquid phase, the refrigerant passes through the fourth refrigerant pipe 24 and returns to the suction port in the compressor 6 via the four-way valve 8 and the accumulator 26.

Also, part of a liquid refrigerant diverged from the second refrigerant pipe 20 between the indoor heat exchanger 16 and the strainer 10 passes through the sixth refrigerant pipe 38 and the second solenoid valve 42 and absorbs heat from the heat storage material 36 when passing through the heat storage heat exchanger 34. The liquid refrigerant then evaporates and turns into a gas phase. The resultant gaseous refrigerant passes through the seventh refrigerant pipe 40, then joins a refrigerant passing through the fourth refrigerant pipe 24, and finally returns to the suction port in the compressor 6 via the accumulator 26.

Although the refrigerant returning to the accumulator 26 contains a liquid refrigerant returning from the outdoor heat exchanger 14, the liquid refrigerant is mixed with a gaseous high-temperature refrigerant returning from the heat storage heat exchanger 34 to thereby promote evaporation of the liquid refrigerant. Accordingly, it is not likely that a liquid refrigerant may pass through the accumulator 26 and return to the compressor 6, thus making it possible to enhance the reliability of the compressor 6.

At the start of defrosting/heating, the temperature of the outdoor heat exchanger 14 is below the freezing point by adhesion of frost, but when the outdoor heat exchanger 14 is heated by the gaseous refrigerant discharged from the discharge port in the compressor 6, frost adhering to the outdoor heat exchanger 14 melts in the vicinity of zero degree and the temperature of the outdoor heat exchanger 14 begins to increase upon termination of melting of the frost. When the piping temperature sensor 45 detects such a temperature rise of the outdoor heat exchanger 14, a determination is made that defrosting has been completed and the controller outputs a command to shift the defrosting/heating operation to the normal heating operation.

A shape of a junction (portion "A" in Fig. 3) between the seventh refrigerant pipe 40 and the fourth refrigerant pipe 24 is discussed hereinafter in detail with reference to Fig. 4.

In the case of the shape shown in Fig. 4, the seventh refrigerant pipe 40 joins the fourth refrigerant pipe 24 at an angle of about 90 degrees. This shape allows a refrigerant passing through the seventh refrigerant pipe 40 to impinge on a refrigerant within the fourth refrigerant pipe 24 and, hence, a resistance of flow at the junction where the refrigerant in the seventh refrigerant pipe 40 enters the fourth refrigerant pipe 24 increases to increase a pressure loss of a whole bypass piping system including the sixth refrigerant pipe 38, the heat storage heat exchanger 34, and the seventh refrigerant pipe 40, thus leading sometimes to a reduction in refrigerant circulation volume in the bypass piping system.

If the temperature of the heat storage material 36 is high, the heat exchanging performance of the heat storage heat exchanger 34 is very high, and if the refrigerant circulation volume in the heat storage heat exchanger 34 is small, the degree of superheat becomes high in the latter half of the heat storage heat exchanger 34, which in turn becomes incapable of heat exchanging. Accordingly, the amount of heat exchange in the heat storage heat exchanger 34 is limited, thus resulting sometimes in an insufficient defrosting performance.

### (Embodiment 2)

Fig. 5 depicts another shape of the junction (portion "A" in Fig. 3) between the seventh refrigerant pipe 40 and the fourth refrigerant pipe 24 to improve the above-discussed disadvantage.

In the case of the shape shown in Fig. 5, the seventh refrigerant pipe 40 joins the fourth refrigerant pipe 24 from an upstream side of the fourth refrigerant pipe 24 at an angle of less than 90 degrees. This shape has a small collision loss when the refrigerant flowing through the seventh refrigerant pipe 40 impinges on the refrigerant within the fourth refrigerant pipe 24 as compared with the shape shown in Fig. 4 and, hence, the resistance of flow at the junction where the refrigerant in the seventh refrigerant pipe 40 enters the fourth refrigerant pipe 24 reduces to reduce the pressure loss of the whole bypass piping system including the sixth refrigerant pipe 38, the heat storage heat exchanger 34, and the seventh refrigerant pipe 40, thus increasing the refrigerant circulation volume in the bypass piping system.

As a result, even if the temperature of the heat storage material 36 is high and the heat exchanging performance of the heat storage heat exchanger 34 is very high, a phenomenon in which the degree of superheat becomes high in the latter half of the heat storage heat exchanger 34, which in turn becomes incapable of heat exchanging, is unlikely to occur because of the increased refrigerant circulation volume, thus allowing the heat storage heat exchanger 34 to show a sufficient heat exchanging performance and a sufficient defrosting performance.

### (Embodiment 3)

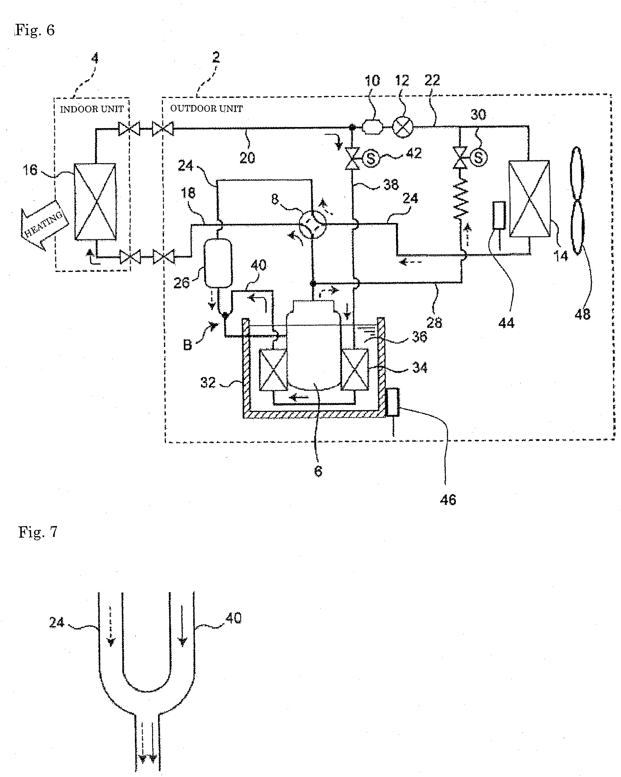

Fig. 6 depicts a refrigeration cycle having still another shape of the junction between the seventh refrigerant pipe 40 and the fourth refrigerant pipe 24, and Fig. 7 depicts the junction (portion "B" in Fig. 6) between the seventh refrigerant pipe 40 and the fourth refrigerant pipe 24.

Although the junction between the seventh refrigerant pipe 40 and the fourth refrigerant pipe 24 as shown in Fig. 3 is located between the four-way valve 8 and the accumulator 26, the junction between the seventh refrigerant pipe 40 and the fourth refrigerant pipe 24 in this embodiment is located between the accumulator 26 and the compressor 6, as shown in Fig. 6.

In the configuration shown in Fig. 3, a refrigerant that has evaporated and turned into a gas phase upon absorption of heat from the heat storage material in the heat storage heat exchanger 34 passes through the seventh refrigerant pipe 40, joins a refrigerant passing through the fourth refrigerant pipe 24 at a location between the four-way valve 8 and the accumulator 26, and returns to the suction port in the compressor 6 via the accumulator 26.

However, because the accumulator 26 whose temperature is reduced prior to defrosting has a large heat capacity and, a gaseous high-temperature refrigerant returning from the heat storage heat exchanger 34 during defrosting is cooled by the accumulator 26. Accordingly, sufficient heat cannot be used for defrosting, thus resulting sometimes in an increase in time period for defrosting.

On the other hand, in this embodiment, the refrigerant from the heat storage heat exchanger 34 returns to the compressor 6 not through the accumulator 26. Accordingly, heat of the gaseous high-temperature refrigerant can be effectively used for defrosting, thus making it possible to reduce the time period required for defrosting.

It is to be noted that the above-described construction is not limited to this embodiment, but is also applicable to the first or second embodiment referred to above.

Also, as shown in Figs. 6 and 7, the junction between the fourth refrigerant pipe 24 and the seventh refrigerant pipe 40 is substantially U-shaped and, accordingly, the seventh refrigerant pipe 40 is connected to the fourth refrigerant pipe 24 so as to be substantially parallel to the fourth refrigerant pipe 24 on an upstream side of the junction between the seventh refrigerant pipe 40 and the fourth refrigerant pipe 24. That is, the junction is designed such that a refrigerant passing through the fourth refrigerant pipe 24 joins another refrigerant passing through the seventh refrigerant pipe 40 as substantially parallel flows, thereby minimizing the collision loss of both the refrigerants.

### <Control of Outdoor Fan>

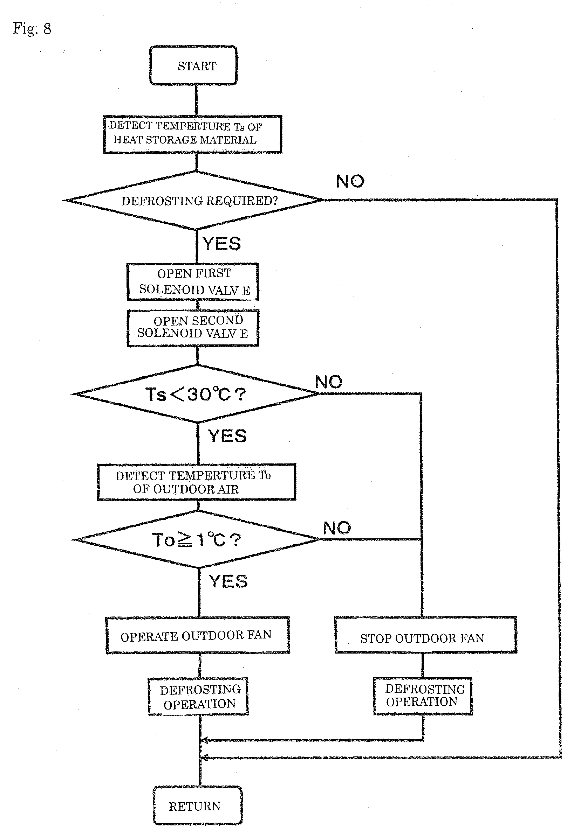

Control of the outdoor fan 48 and the like is explained hereinafter with reference to Fig. 8 depicting a control action. The following control of the outdoor fan 48 is also applicable to the refrigeration cycle equipment according to the embodiments referred to above.

When the temperature of outdoor air is high during heating, no large heating capacity is generally required and, in the refrigeration equipment like the equipment according to the present invention, the compressor 6 is controlled at a low capacity. Accordingly, the temperature of the compressor 6 is difficult to increase and, as a result, it often happens that the temperature of the heat storage material 36 does not increase.

On the other hand, even when the temperature of outdoor air is high, frost grows on the outdoor heat exchanger 14 if the temperature of the outdoor heat exchanger 14 is below the freezing point and also below a dew-point temperature of the outdoor air.

In this case, the frost grows usually slowly, but in order to detect the necessity of the defrosting operation, a reduction in temperature of the outdoor heat exchanger 14 is required, which is caused by adhesion of a given amount of frost to the outdoor heat exchanger 14 and subsequent clogging of the outdoor heat exchanger 14 by the frost. Accordingly, if the amount of frost at the start of the defrosting operation is the same as usual and the amount of heat storage is small, there is a possibility that the defrosting period of time increases or the frost still remains.

Such a tendency is of a nature inherent in the construction like the present invention in which the amount of heat storage depends on the operating conditions of the compressor 6 before the defrosting operation.

In Fig. 8, the temperature of the heat storage material 36 is detected by the heat storage material temperature sensor 46 before the defrosting operation.

Upon progress of frost formation, if a determination is made that defrosting is necessary (a method of determining the frost formation is omitted), the first solenoid valve 30 and the second solenoid valve 42 are both opened, as described above.

At substantially the same time, a temperature Ts of the heat storage material detected before the start of defrosting is compared with a criterion temperature for determination set in advance. The criterion temperature for determination is set based on a specific heat of the heat storage material 36, the outdoor heat exchanger 14 or the like. In this embodiment, the criterion temperature is determined to be, for example, 30°C based on the temperature (for example, 40°C) of the compressor 6 when the compressor 6 is in operation at a low capacity with a heat-transfer loss or the like taken into consideration as well.

Also, at the same time, a temperature To of outdoor air detected by the outdoor temperature sensor 44 is compared with a criterion temperature for determination set in advance. In this embodiment, this criterion temperature is determined to be, for example, 1°C, in consideration of that an amount of heat in outdoor air can be used for defrosting only when the temperature of the outdoor air is 0°C or more as well as errors in design.

If both the temperature determinations are satisfied, the defrosting operation is conducted by operating the outdoor fan 48, as indicated in the flowchart.

On the other hand, if any one of the temperature determinations is not satisfied, the defrosting operation is conducted with the outdoor fan 48 retained at rest, as indicated in the flowchart.

Although in this embodiment the temperature determinations are conducted at the start of the defrosting operation to determine whether or not the outdoor fan 48 should be operated during the defrosting operation, similar effects can be naturally produced by making the determination of the outdoor air temperature in the course of the defrosting operation and by subsequently starting or stopping the operation of the outdoor fan.

### Industrial Applicability

Because the refrigeration cycle equipment according to the present invention can enhance the defrosting capacity of an air-source heat pump, in which waste heat of the compressor is utilized, at high outdoor temperatures, it is effectively applicable to air conditioners, water heaters, heat pump washing machines, and the like.

### REFERENCE SIGNS LIST

2 outdoor unit, 4 indoor unit, 6 compressor, 8 four-way valve,
10 strainer, 12 expansion valve, 14 outdoor heat exchanger,
16 indoor heat exchanger, 18 first refrigerant pipe,
20 second refrigerant pipe, 22 third refrigerant pipe,
24 fourth refrigerant pipe, 26 accumulator, 28 fifth refrigerant pipe,
30 first solenoid valve, 32 heat storage tank,
34 heat storage heat exchanger, 36 heat storage material,
38 sixth refrigerant pipe, 40 seventh refrigerant pipe,
42 second solenoid valve, 44 outdoor temperature sensor,
45 piping temperature sensor, 46 heat storage material temperature sensor,
48 outdoor fan.

## Claims

1. Refrigeration cycle equipment having a compressor (6), an indoor heat exchanger (16) connected to the compressor (6), an expansion valve (12) connected to the indoor heat exchanger (16), an outdoor heat exchanger (14) connected to the expansion valve (12), a four-way valve (8) through which the outdoor heat exchanger (14) is connected to the compressor (6), and an outdoor fan (48),
**characterized in that** the refrigeration cycle equipment further comprises:
an outdoor temperature detecting means (44) operable to detect an outdoor temperature;
a heat storage material (36) disposed around the compressor (6) to store heat generated by the compressor (6) only via an outer wall of the compressor (6);
a heat storage heat exchanger (34) operable to heat-exchange with heat stored in the heat storage material (36);
a heat storage material temperature detecting means (46) operable to detect a temperature of the heat storage material (36); and
a controller to which the outdoor fan (48), the outdoor temperature detecting means (44) and the heat storage material temperature detecting means (46) are electrically connected, the controller being configured to perform a defrosting operation
wherein in the defrosting operation controlled by the controller, a refrigerant discharged from the compressor (6) is introduced to the outdoor heat exchanger (14) and to the heat storage heat exchanger (34) via the indoor heat exchanger (16); and a refrigerant having passed through the outdoor heat exchanger (14) and another refrigerant heat-exchanged with the heat storage material (36) in the heat storage heat exchanger (34) join and are subsequently introduced to a suction side of the compressor (6); and
wherein when the temperature of the heat storage material (36) detected by the heat storage material temperature detecting means (46) is less than or equal to a predetermined value and the outdoor temperature detected by the outdoor temperature detecting means (44) is greater than or equal to a predetermined value, the outdoor fan (48) is operated by the controller.

## Patentansprüche

1. Kältekreislaufvorrichtung mit einem Kompressor (6), einem Innenwärmetauscher (16), der mit dem Kompressor (6) verbunden ist, einem Expansionsventil (12), das mit dem Innenwärmetauscher (16) verbunden ist, einem Außenwärmetauscher (14), der mit dem Expansionsventil (12) verbunden ist, einem Vier-WegeVentil (8), durch das der Außenwärmetauscher (14) mit dem Kompressor (6) verbunden ist, und einem Außengebläse (48),
**dadurch gekennzeichnet, dass** die Kältekreislaufvorrichtung ferner umfasst:
eine Außentemperatur-Erfassungseinrichtung (44), die betriebsfähig ist, um eine Außentemperatur zu erfassen;
ein Wärmespeichermaterial (36), das um den Kompressor (6) herum angeordnet ist, um Wärme zu speichern, die von dem Kompressor (6) nur über eine Außenwand des Kompressors (6) erzeugt wird;
einen Wärmespeicher-Wärmetauscher (34), der zum Wärmetausch mit Wärme, die in dem Wärmespeichermaterial (36) gespeichert ist, betriebsfähig ist;
eine Wärmespeichermaterialtemperatur-Erfassungseinrichtung (46), die betriebsfähig ist, um eine Temperatur des Wärmespeichermaterials (36) zu erfassen; und
eine Steuerung, mit der das Außengebläse (48), die Außentemperatur-Erfassungseinrichtung (44) und die Wärmespeichermaterialtemperatur-Erfassungseinrichtung (46) elektrisch verbunden sind, wobei die Steuerung dazu eingerichtet ist, einen Entfrostungsvorgang auszuführen,
wobei bei dem von der Steuerung gesteuerten Entfrostungsvorgang ein von dem Kompressor (6) ausgestoßenes Kältemittel über den Innenwärmetauscher (16) in den Außenwärmetauscher (14) und den Wärmespeicher-Wärmetauscher (34) eingeleitet wird; und ein Kältemittel, das durch den Außenwärmetauscher (14) geströmt ist, und ein anderes Kältemittel, das mit dem Wärmespeichermaterial (36) in dem Wärmespeicher-Wärmetauscher (34) Wärme ausgetauscht hat, zusammenfließen und anschließend in eine Saugseite des Kompressors (6) eingeleitet werden; und
wobei dann, wenn die Temperatur des Wärmespeichermaterials (36), die von der Wärmespeichermaterialtemperatur-Erfassungseinrichtung (46) erfasst wird, kleiner oder gleich einem vorgegebenen Wert ist und die Außentemperatur, die von der Außentemperatur-Erfassungseinrichtung (44) erfasst wird, größer oder gleich einem vorgegebenen Wert ist, das Außengebläse (48) von der Steuerung betätigt wird.

## Revendications

1. Équipement à cycle de réfrigération présentant un compresseur (6), un échangeur de chaleur intérieur (16) relié au compresseur (6), une vanne de détente (12) reliée à l'échangeur de chaleur intérieur (16), un échangeur de chaleur extérieur (14) relié à la vanne de détente (12), une vanne à quatre voies (8), par l'intermédiaire de laquelle l'échangeur de chaleur extérieur (14) est relié au compresseur (6), et un ventilateur extérieur (48),
**caractérisé en ce que** l'équipement à cycle de réfrigération comprend en outre :
un moyen de détection de la température extérieure (44) pouvant fonctionner pour détecter une température extérieure ;
un matériau de stockage de chaleur (36) disposé autour du compresseur (6) pour stocker la chaleur générée par le compresseur (6) uniquement par l'intermédiaire d'une paroi externe du compresseur (6) ;
un échangeur de chaleur de stockage de chaleur (34) pouvant fonctionner pour échanger de la chaleur avec la chaleur stockée dans le matériau de stockage de chaleur (36) ;
un moyen de détection de la température du matériau de stockage de chaleur (46) pouvant fonctionner pour détecter une température du matériau de stockage de chaleur (36) ; et
un dispositif de commande auquel le ventilateur extérieur (48), le moyen de détection de la température extérieure (44) et le moyen de détection de la température du matériau de stockage de chaleur (46) sont connectés électriquement, le dispositif de commande étant configuré pour effectuer une opération de dégivrage où, dans l'opération de dégivrage commandée par le dispositif de commande, un fluide frigorigène évacué du compresseur (6) est introduit dans l'échangeur de chaleur extérieur (14) et dans l'échangeur de chaleur de stockage de chaleur (34) par l'intermédiaire de l'échangeur de chaleur intérieur (16) ; et un fluide frigorigène ayant traversé l'échangeur de chaleur extérieur (14) et un autre fluide frigorigène échangé thermiquement avec le matériau de stockage de chaleur (36) dans l'échangeur de chaleur de stockage de chaleur (34) se rejoignent et sont ensuite introduits dans un côté d'aspiration du compresseur (6) ; et
où, lorsque la température du matériau de stockage de chaleur (36) détectée par le moyen de détection de la température du matériau de stockage de chaleur (46) est inférieure ou égale à une valeur prédéterminée et que la température extérieure détectée par le moyen de détection de la température extérieure (44) est supérieure ou égale à une valeur prédéterminée, le ventilateur extérieur (48) est actionné par le dispositif de commande.
